# DEMANDE DE BREVET EUROPEEN

(11) **EP 1 796 007 A1**
(43) Date de publication de la demande: **13.06.2007**
(21) Numéro de dépôt: 05301033.6
(22) Date de dépôt: 08.12.2005
(51) Int. Cl.: G06F 17/27, G06F 17/30

(54) **Procédé pour rassembler automatiquement des données de carte de visite relatives à une même personne, à partir d'une pluralité de fichiers électroniques**

(71) Demandeur: Alcatel Lucent, 75008 Paris (FR)
(72) Inventeur: Jabaud, Philippe, 91460 Marcoussis (FR); Larvet, Philippe, 91470 Forges les Bains (FR)
(74) Mandataire: Sciaux, Edmond

(57) **Abrégé**

Il consiste à :
- désigner préalablement les types de fichier électronique qui seront considérés ;
- associer préalablement à chaque type de fichier qui sera considéré un module logiciel dit extracteur qui sera utilisé pour ouvrir, analyser chaque fichier de ce type, et extraire des données de carte de visite ;
- puis analyser chaque fichier qui appartient à ladite pluralité de fichiers, au moyen du module extracteur qui est associé à son type ;
- et rassembler toutes les données trouvées par cette analyse, en les regroupant dans une seule carte de visite par personne.

## Description

L'invention concerne un procédé pour rassembler automatiquement des données de carte de visite relatives à une même personne, à partir d'une pluralité de fichiers électroniques.

L'utilisateur d'un ordinateur personnel possède généralement un carnet d'adresses, sous la forme d'un fichier informatique stocké dans cet ordinateur. Ce fichier informatique comporte une partie dédiée respectivement à chaque personne. La technologie utilisée pour constitué un tel fichier est généralement la technologie vCard qui est définie par les normes RFC 2425 et RFC 2426 de l'Internet Mail Consortium. Cette technologie a été créée pour définir des cartes de visites électroniques, appelées vCards, échangeables entre ordinateurs, par exemple. Dans un carnet d'adresses, la partie dédiée à une personne est appelée objet vCard, et est analogue à une carte de visite électronique. D'ailleurs, un carnet d'adresses peut être constitué en enregistrant successivement des cartes de visite électroniques, dans un fichier carnets d'adresses, au moyen d'un logiciel classique appelé gestionnaire de carnet d'adresses ou gestionnaire de contacts.

Une autre façon de constituer un carnet d'adresses en utilisant un gestionnaire de carnet d'adresses, consiste à saisir au clavier toutes les informations.

Chaque carte de visite électronique peut contenir : un nom, des prénoms, des numéros de téléphone fixe, de téléphone mobile, de fax ; une ou plusieurs adresses électroniques ; une ou plusieurs adresses physiques ; un logo ; une photo ; un fichier sonore ; etc. Les données susceptibles d'être stockées dans un carnet d'adresses sont donc très nombreuses, et on ne les trouve pas toujours sous la forme d'objets vCards déjà constitués. Au contraire, on trouve souvent ces informations de manière dispersée dans un ou plusieurs fichiers électroniques. En outre, si elles sont dispersées sur une pluralité de fichiers, ces fichiers peuvent être de types différents. Par exemple, on trouve le nom d'une personne et son numéro de téléphone dans un document Word, et on trouve son adresse de courrier électronique dans un courriel. Il est fastidieux de rassembler des informations ainsi dispersée, concernant une même personne, en vue de les mettre dans un carnet d'adresses. Il serait souhaitable de pouvoir les rassembler automatiquement, personne par personne, directement à partir de la pluralité de fichiers électroniques où elles ont disponibles.

Il n'y a pas de procédé entièrement automatique pour réaliser cette opération. On connaît des logiciels, appelés moteurs de recherche, (Google Desktop par exemple) capables de retrouver des mots donnés, en analysant tous les fichiers, d'un type donné, stockés sur un ordinateur. Un tel logiciel permet de retrouver des informations déjà rassemblées sous la forme d'un objet vCard, mais ne permet pas de rassembler des informations dispersées, par exemple le nom et un numéro de téléphone dans un premier document, le nom et l'adresse postale dans un second document, pour une même personne.

Le but de l'invention est de proposer un procédé pour rassembler automatiquement des données de carte de visite, relatives à une même personne, à partir d'une pluralité de fichiers électroniques qui sont éventuellement de types différents.
L'objet de l'invention est un procédé caractérisé en ce qu'il consiste à :
- désigner préalablement les types de fichier électronique qui sont à considérer ;
- associer préalablement à chaque type de fichier qui est à considérer un module logiciel dit extracteur apte à ouvrir et analyser chaque fichier de ce type, pour extraire des données de carte de visite, et associer chaque donnée à une personne ;
- puis analyser chaque fichier qui appartient à ladite pluralité de fichiers, au moyen du module extracteur qui est associé à son type,
- et rassembler toutes les données trouvées par cette analyse, en les regroupant dans une seule carte de visite par personne.

Selon un mode de mise en oeuvre préférentiel, pour rassembler toutes les données trouvées par cette analyse, en les regroupant dans une seule carte de visite par personne, il consiste à comparer la réunion des valeurs d'une combinaison de champs dans la première carte de visite, avec la réunion des valeurs de la même combinaison de champs dans une seconde carte de visite, cette combinaison de champs étant choisie telle que la réunion des valeurs contenues dans cette combinaison de champs forme une valeur qui est propre à une seule personne.

L'invention sera mieux comprise et d'autres caractéristiques apparaîtront à l'aide de la description ci-dessous et des figures l'accompagnant :
- La figure 1 illustre un exemple de mise en oeuvre du procédé selon l'invention.
- La figure 2 illustre un exemple de module logiciel capable d'ouvrir et analyser des fichiers de type texte pur, utilisable pour la mise en oeuvre du procédé selon l'invention.

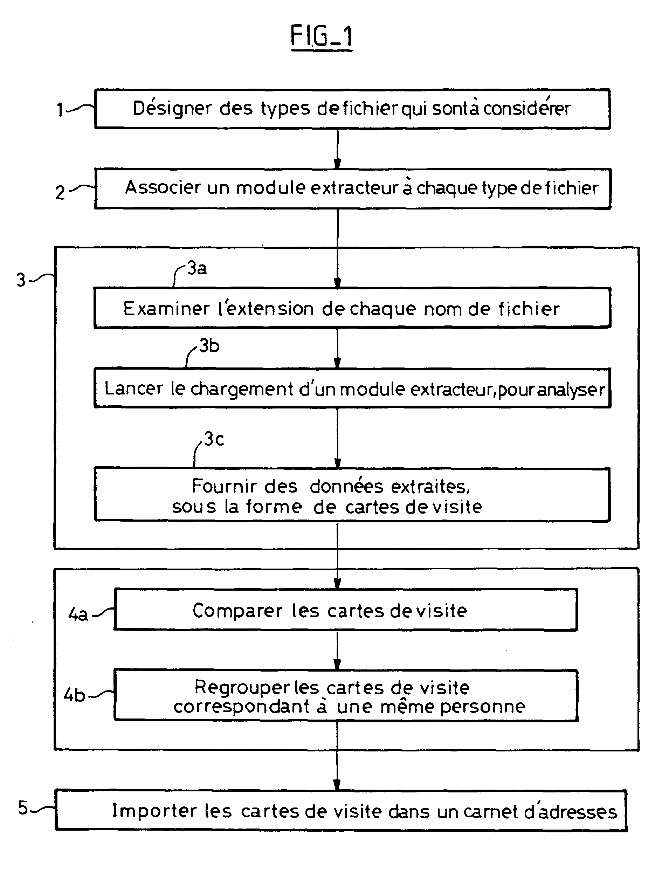

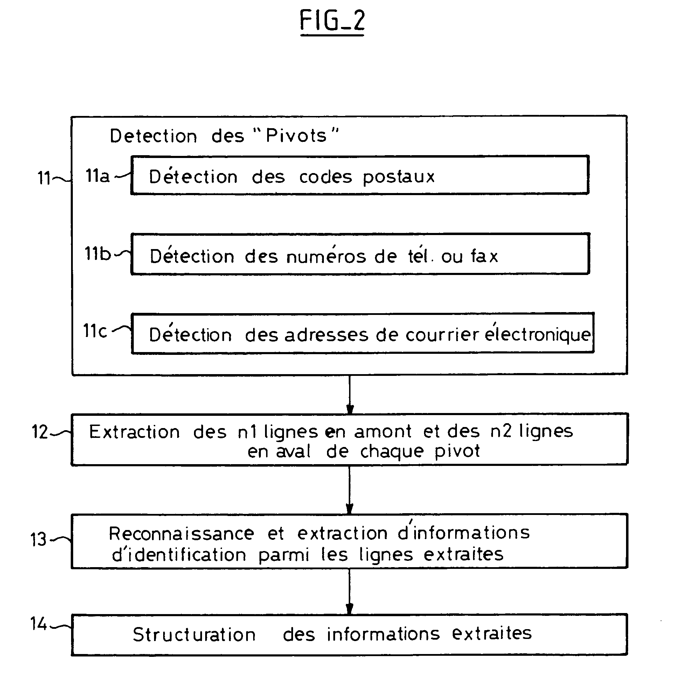

L'exemple de mise en oeuvre illustré par la **figure 1** comprend les étapes suivantes :
- 1) Dans un fichier de configuration, l'utilisateur désigne préalablement les types de fichier électronique qui sont à considérer, parce qu'ils sont susceptibles de contenir des informations de carte de visite. Ces types sont identifiés par l'extension que comporte chaque nom de fichier. Par exemple, les données de carte de visite que l'utilisateur souhaite extraire et rassembler sont disponibles dans des documents de type :
   -- Microsoft Word (extension .doc)
   -- Microsoft Powerpoint (extension .ppt)
   -- Texte pur sans mise en forme (extension .txt)
   -- Courriels Microsoft Outlook Express (extension .dbx)
- 2) Dans le fichier de configuration, l'utilisateur associe préalablement, à chacun des types de fichier électronique qui seront considérés, un module logiciel dit extracteur, qui sera utilisé pour ouvrir et analyser chaque fichier de ce type, pour y trouver des données de carte de visite, et associer chaque donnée à une personne, c'est à dire constituer une carte de visite. Cette personne est identifiée par une combinaison de champs de carte de visite. Les champs qui sont choisis pour identifier une personne sont des champs plus particulièrement discriminants. Si, par exemple, les valeurs des champs Nom, Prénom, Numéro de téléphone ont été trouvées dans un document, dans un même passage, leur combinaison est utilisée comme identificateur de la personne, notamment pour décider si deux cartes de visites appartiennent à une même personne. C'est plus fiable que d'identifier une personne par la seule valeur du champ Nom ; même la combinaison des valeurs des champs Nom et Prénom n'est pas suffisamment fiable. Si la valeur du champ Prénom n'a pas été trouvée, mais si la valeur du champ Nom et la valeur du champ Adresse de courrier électronique ont été trouvées, par exemple, le module extracteur utilise la combinaison des valeurs des champs Nom, Numéro de téléphone, et Adresse de courrier électronique, comme identificateur de la personne. Un exemple de tel module extracteur sera décrit plus loin en se référant à la figure 2.
- 3) Quand l'utilisateur lance une recherche des informations de carte de visite, un module logiciel parcourt tout le système de fichiers de l'ordinateur de l'utilisateur.
   -- a) Il examine l'extension (.doc, .ppt, etc) de chaque nom de fichier, et la compare avec la liste d'extensions, enregistrée dans le fichier de configuration. Il détecte ainsi chaque fichier dont le type est un des types désignés préalablement par l'utilisateur.
   -- b) Dans le cas où il a détecté ainsi un fichier dont le type est un des types désignés préalablement par l'utilisateur, il recherche, dans le fichier de configuration, quel est le module extracteur qui a été associé préalablement à ce type de fichier. Il lance le chargement de ce module extracteur en mémoire de travail (si ce n'est déjà fait), pour analyser le fichier détecté.
   -- c) Ce module extracteur extrait, le cas échéant, des données de carte de visite et les restitue sous la forme d'une ou plusieurs carte de visite au format normalisé vCard.
- 4) Un module logiciel dit de corrélation rassemble toutes les cartes de visites constituées avec les données trouvées par cette analyse, en les regroupant personne par personne, de façon à n'avoir qu'une seule nouvelle carte de visite par personne :
   -- a) Le module de corrélation compare les contenus de toutes les nouvelles cartes de visite fournies par les modules extracteurs. Plus précisément, pour comparer deux cartes de visite, il considère les champs qui ont une valeur dans chacune des deux cartes. Il compare les deux valeurs d'un même champ. Si un même champ, par exemple Prénom, a des valeurs différentes dans les deux cartes, le module de corrélation conclue immédiatement que les deux cartes ne peuvent pas appartenir à une même personne. Dans le cas contraire, pour conclure que deux cartes appartiennent à une même personne, il compare en outre la réunion des valeurs d'une combinaison de champs dans la première carte, avec la réunion des valeurs de la même combinaison de champs dans la seconde carte. Cette combinaison de champs est choisie telle que la réunion des valeurs contenues dans cette combinaison de champs forme une valeur qui est propre à une seule personne. Par exemple :
      --- La réunion des valeurs contenues dans la combinaison des champs Nom, Prénom, Numéro de téléphone, forme une valeur qui est propre à une seule personne.
      --- La réunion des valeurs contenues dans la combinaison des champs Nom, Prénom, Adresse de courrier électronique, forme une autre valeur qui est propre à une seule personne.
   -- b) Le module de corrélation fusionne les cartes de visites pour lesquelles il a conclu qu'elles appartiennent à une même personne.
- 5) Un module d'importation de cartes de visite vCards, spécifique au carnet d'adresses de l'utilisateur, importe les nouvelles cartes de visite dans le carnet d'adresses de l'utilisateur. La plupart des gestionnaires de carnet d'adresses possède un module logiciel d'importation de cartes de visite vCards, ou possèdent une interface de programmation d'application, qui permet de réaliser un tel module d'importation. On peut prévoir dans le module d'importation une fonction de gestion des doublons, et une fonction d'amendement des cartes de visites déjà enregistrées dans le carnet d'adresses, de façon à fusionner les information d'une nouvelle carte avec les informations déjà enregistrées dans le carnet d'adresses, pour une même personne.

La **figure 2** illustre un exemple de module extracteur, capable d'ouvrir et analyser des fichiers de type texte pur, utilisable pour la mise en oeuvre du procédé selon l'invention. Il effectue les opérations suivantes :
- 11) Rechercher dans le texte considéré des chaînes de caractères qui sont particulièrement caractéristiques d'informations d'identification d'une personne (physique ou morale). Parce qu'elles sont particulièrement caractéristiques, ces chaînes de caractères sont considérés comme les « pivots » de toute portion de texte contenant des information d'identification d'une personne. Cette recherche des « pivots » dans un texte peut être faite au moyen d'un module logiciel classique. Trois « pivots » sont à rechercher :
   -- 11a) Une chaîne de N chiffres consécutifs suivie d'au moins un espace et précédée d'au moins un espace. Le nombre N est un paramètre prédéterminé par l'utilisateur. Un utilisateur français qui utilise essentiellement des codes postaux français fixera N=5 parce que toute chaîne de cinq chiffres, dans les documents de cet utilisateur, aura une forte probabilité d'être un code postal français. Le nombre de chiffres, ou de lettres et chiffres, varie selon les pays. Il doit être adapté à la structure des codes postaux rencontrés par l'utilisateur. Optionnellement, il peut être prévu une vérification de cohérence par rapport à certaines règles de constitution d'un code postal. Par exemple, un code postal français commence toujours pas deux chiffres dont la valeur est comprise entre 01 et 95.
   -- 11b) Une chaîne d'au moins P chiffres consécutifs, suivie d'au moins un espace et précédée d'au moins un espace, avec éventuellement des caractères spéciaux intercalés (espace, barre, virgule, tiret, point), le nombre P étant prédéterminé et choisi parce qu'une chaîne de P chiffres a une forte probabilité d'être un numéro de téléphone ou de fax. Le nombre de chiffres utilisés varie selon les pays. Le nombre P doit être adapté à la structure des numéros rencontrés par l'utilisateur. Un nombre P= 10 convient dans la plupart des pays. Optionnellement, il peut être prévu une vérification de cohérence par rapport à certaines règles de constitution d'un numéro de téléphone. Par exemple, un numéro de téléphone français commence toujours par deux chiffres dont la valeur est prise dans la liste : 01, 02, 03, 04, 05, 06, 08, 33.
   -- 11c) Une chaîne de caractères comportant le caractère arobase « @ » précédé d'une chaîne de caractères comportant un point, et suivi d'une chaîne de caractères comportant un point, parce qu'elle a une forte probabilité d'être une adresse de courrier électronique. La longueur de la chaîne à rechercher est fixée, par exemple, à vingt caractères en amont et vingt caractères en aval du caractère « @ ».
- 12) Extraire toutes les données situées à une distance prédéterminée de chaque « pivot » détecté au cours de l'étape précédente, cette distance étant exprimée en nombre de lignes de texte ou en nombre de mots. Par exemple, extraire tous les caractères situés sur les n1 lignes en amont et sur les n2 lignes en aval de la ligne contenant le « pivot », n1 et n2 étant des paramètres dont les valeurs sont fonctions du type de « pivot » détecté. Si le « pivot » détecté est un code postal, on peut fixer n1=10 et n2=5 pour avoir de bonnes chances de trouver une adresse postale complète et ne pas extraire d'informations inutiles.
- 13) Reconnaître et extraire des informations d'identification parmi les données extraites au cours de l'étape précédente. Cette opération est réalisée de préférence ligne par ligne.
   -- a) Rechercher une chaîne de caractères par comparaison avec une liste prédéterminée de prénoms. Extraire tout prénom trouvé, et extraire la chaîne de caractère qui le précède et la chaîne de caractères qui le suit, sur la même ligne car ces chaînes de caractères contiennent généralement un patronyme. Le plus souvent une telle ligne contient seulement : Nom + Prénom ou Prénom + Nom, sans autres données.
   -- b) Rechercher une chaîne de caractères par comparaison avec une liste prédéterminée de mots caractéristiques d'une adresse : « rue », « boulevard », « place », « impasse », « résidence », etc. Extraire toute la ligne car, le plus souvent, une telle ligne contient seulement des informations d'adresse physique.
   -- c) Rechercher un numéro de téléphone, comme indiqué au paragraphe 1 b pour trouver un « pivot ». Extraire toute la ligne car, le plus souvent, une telle ligne contient seulement un numéro et l'indication « tel » ou « fax ».
   -- d) Rechercher un code postal, comme indiqué au paragraphe 1c pour trouver un « pivot ». Extraire toute la ligne car, le plus souvent, une telle ligne contient seulement un code postal et un nom de ville.
   -- e) Rechercher une adresse de courrier électronique, comme indiqué au paragraphe 1d pour trouver un « pivot ». Extraire toute la ligne car, le plus souvent, une telle ligne contient seulement une adresse électronique.
   -- f) Optionnellement, si on veut rechercher une date de naissance qu'on peut souhaiter ajouter dans un carnet d'adresses en vue d'un recrutement par exemple, rechercher une date, selon un procédé classique de reconnaissance des formats utilisés couramment pour les dates. Puis rechercher des chaînes de caractères « né le », « née le », « date de naissance », en amont de la date. Si une telle chaîne de caractère est trouvée, extraire cette ligne car elle indique une date de naissance.
   -- g) Optionnellement, si on veut rechercher d'autres informations complémentaires qu'on peut souhaiter ajouter dans un carnet d'adresses en vue d'un recrutement par exemple, rechercher une chaîne de caractères par comparaison avec une liste prédéterminée de mots caractéristiques des informations complémentaires ; par exemple : « permis de conduire », loisirs », « langues », « obligations militaires », etc. Extraire toute la ligne chaque fois qu'une telle chaîne est trouvée car, le plus souvent, une telle ligne contient seulement une rubrique.
- 14) Structurer les informations extraites selon une syntaxe prédéterminée, de préférence la syntaxe normalisée pour la vCard. Par exemple, on obtient une vCard de la forme suivante :
   *begin:vcard*
   *fn:Christine Dupont*
   *n:Dupont;Christine*
   *org:Ecole des Mines de Nantes;Direction de la Recherche, de*
   *l'Innovation et du Transfert de Technologie*
   *adr1:4, rue Alfred Kastler, B. P. 20722*
   *adr2:44307 NANTES Cedex 03*
   *email;internet:christine.brassort@emn.fr*
   *tel;work:02.51.85.00.00*
   *tel;fax:02.51.85.11.11*
   *version:2.1*
   end:vcard

La réalisation de modules extracteurs pour d'autres types de fichier est à la portée de l'Homme de l'Art. Les données à extraire ne sont pas forcément sous la forme de texte pur. Il est à la portée d'un Homme de l'Art de concevoir un module extracteur adapté à un format spécifique, par exemple le format des données qu'on trouve dans une base de données de type SQL.

## Revendications

1. Procédé pour rassembler automatiquement des données de carte de visite relatives à une même personne, à partir d'une pluralité de fichiers électroniques, **caractérisé en ce qu'**il consiste à :
- désigner préalablement (1) les types de fichier électronique qui sont à considérer ;
- associer préalablement (2) à chaque type de fichier qui est à considérer un module logiciel dit extracteur apte à ouvrir et analyser chaque fichier de ce type, pour extraire des données de carte de visite, et associer chaque donnée à une personne ;
- puis analyser (3) chaque fichier qui appartient à ladite pluralité de fichiers, au moyen du module extracteur qui est associé à son type,
- et rassembler (4) toutes les données trouvées par cette analyse, en les regroupant dans une seule carte de visite par personne.

2. Procédé selon la revendication 1, **caractérisé en ce que** pour rassembler toutes les données trouvées par cette analyse, en les regroupant dans une seule carte de visite par personne, il consiste à comparer (4a) la réunion des valeurs d'une combinaison de champs dans la première carte de visite, avec la réunion des valeurs de la même combinaison de champs dans une seconde carte de visite, cette combinaison de champs étant choisie telle que la réunion des valeurs contenues dans cette combinaison de champs forme une valeur qui est propre à une seule personne.

3. Procédé selon la revendication 1, **caractérisé en ce qu'**il consiste en outre à importer (5) la carte de visite dans un carnet d'adresses.

4. Moyen de stockage sur lequel est enregistré un programme comportant des instructions qui, lorsqu'elles sont exécutées sur un dispositif programmable, réalisent les étapes selon l'une des revendications 1 à 3.

## Revendications modifiées

### Revendications modifiées conformément à la règle 86(2) CBE.

**1.** Procédé pour rassembler automatiquement des données de carte de visite relatives à une même personne, à partir d'une pluralité de fichiers électroniques, consistant à :
- analyser chaque fichier qui appartient à ladite pluralité de fichiers, pour extraire des données pertinentes,
- et rassembler toutes les données trouvées par cette analyse, en les regroupant par personne ;
**caractérisé en ce que** pour analyser des fichiers électroniques de types différents, il consiste à :
- désigner préalablement (1) une pluralité de types de fichier électronique qui sont à considérer ;
- associer préalablement (2) à chaque type de fichier qui est à considérer un module logiciel dit extracteur, apte à ouvrir et analyser chaque fichier de ce type, pour extraire des données de carte de visite, et associer chaque donnée à une personne ;
et **en ce que**, pour analyser (3) un fichier donné, il consiste à rechercher, parmi une pluralité de modules logiciels extracteurs, respectivement associés à une pluralité de types de fichier, le module extracteur qui a été associé au type de ce fichier donné.

**2.** Procédé selon la revendication 1, **caractérisé en ce que** pour rassembler toutes les données trouvées par cette analyse, en les regroupant dans une seule carte de visite par personne, il consiste à comparer (4a) la réunion des valeurs d'une combinaison de champs dans la première carte de visite, avec la réunion des valeurs de la même combinaison de champs dans une seconde carte de visite, cette combinaison de champs étant choisie telle que la réunion des valeurs contenues dans cette combinaison de champs forme une valeur qui est propre à une seule personne.

**3.** Procédé selon la revendication 1, **caractérisé en ce qu'**il consiste en outre à importer (5) la carte de visite dans un carnet d'adresses.

**4.** Moyen de stockage sur lequel est enregistré un programme comportant des instructions qui, lorsqu'elles sont exécutées sur un dispositif programmable, réalisent les étapes selon l'une des revendications 1 à 3.
